(19) Europäisches Patentamt
European Patent Office
Office européen des brevets

(11) **EP 1 770 411 A2**

(12) **EUROPEAN PATENT APPLICATION**

(43) Date of publication:
**04.04.2007 Bulletin 2007/14**

(51) Int Cl.:
**G01S 13/93** *(2006.01)* **G01S 13/86** *(2006.01)*

(21) Application number: **06020288.4**

(22) Date of filing: **27.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.10.2005 JP 2005289719**

(71) Applicant: **OMRON CORPORATION**
**Kyoto-shi, Kyoto 600-8530 (JP)**

(72) Inventor: **Horibe, Koji,**
**c/o Omron Corporation**
**Shiokoji-dori**
**Shimogyo-ku**
**Kyoto-shi (JP)**

(74) Representative: **Kilian, Helmut**
**Wilhelms, Kilian & Partner**
**Patentanwälte**
**Eduard-Schmid-Strasse 2**
**81541 München (DE)**

(54) **Forward direction monitoring device**

(57) A forward direction monitoring device has a camera to take an image of road condition in front and a back-projection image is generated. A radar part receives reflected waves from objects in front and obtains their relative position data. These relative positions are mapped on the image taken by the camera. Portions of the image are specified with reference to these relative positions and brightness distribution of image portions is analyzed to distinguish the kinds of the objects. After those of the relative position data not related to a desired object are eliminated, the remaining relative position data are obtained sequentially to monitor the desired object based on the obtained data.

EP 1 770 411 A2

**Description**

Background of the Invention

This invention relates to a forward direction monitoring device for monitoring the front of an automobile. In particular, this invention relates to a forward direction monitoring device for monitoring the forward direction by using detection results by a radar device and those by an image-taking device such as a camera.

As examples of a forward monitoring device for monitoring objects in front of an automobile such as another automobile, there have been known various devices having mounted thereto a radar part for detecting an object by transmitting electromagnetic waves forward to a specified area and receiving reflected waves and an image detecting part for detecting a target object of detection from an image of a forward area taken by a camera.

Japanese Patent 3,264,060 discloses a device adapted to apply the position coordinate of an object detected by a radar to an image taken by a camera and to carry out an image processing process only in the area corresponding to the position coordinate of the object detected by the radar to thereby detect the object.

Japanese Patent Publication Tokkai 2002-303671 discloses a device adapted to detect a white line on the road by carrying out a specified image processing process on an image taken by a camera, to detect the delineator detection point by a radar from the position of this white line, to exclude the delineator detection point from the detection point by the radar and to thereby detect an object from the remaining detection point.

Japanese Patent 3,619,628 discloses a device adapted to detect a front-going vehicle in one's own lane and another front-going vehicle in the adjoining lane by using a radar, to set a partial area based on the front-going vehicle detected from an image taken by a camera, to detect a white line on the road within this area and to thereby recognize the environmental condition in front. In other words, the area for detecting the front-going vehicle and the area for detecting a white line are distinguished on the basis of the front-going vehicle detected by the radar.

Japanese Patent Publication Tokkai 9-264954 discloses a device adapted to used a radar to detect a vehicle in front of the own vehicle, to monitor a specified area inclusive of the detected vehicle and also to detect a white line in a specified image area set by the detected vehicle. In other words, this, like the device according to aforementioned Japanese Patent 3,619,628, is also adapted to distinguish between the area for detecting the front-going vehicle and the area for detecting a white line on the basis of the front-going vehicle detected by the radar.

Each of these prior art devices is adapted to monitor a front-going vehicle by narrowing the whole image of a detection area to a partial image area on the basis of the detection results of a front-going vehicle obtained by the radar. All these devices are adapted to distinguish a front-going vehicle from a white line or a delineator on the basis of detection result of an object in front of the own vehicle and to set a partial image area according to a front-going vehicle but if there is a road surface marking such as an arrow mark or a maximum speed display on the road surface immediately behind the front-going vehicle, there is a possibility of mistaking such a display as a front-going vehicle.

Summary of the Invention

It is therefore an object of this invention to provide a forward direction monitoring device capable of distinguishing between a road surface marking near a front-going vehicle from a vehicle and monitoring a front-going vehicle by eliminating data caused by such road surface markings.

A forward direction monitoring device according to this invention may be characterized as comprising an image taking part for taking an image of road condition in front of the vehicle (own vehicle) onto which it is mounted, a radar part for projecting detecting waves into a detection area in front of the own vehicle and receiving reflected waves of the detecting waves from objects in front to thereby detect relative positions of the objects with respect to the own vehicle, a mapping part for mapping the relative positions of the detected objects on the image taken by the image taking part, an object identifying part for specifying image portions of the image with respect to the relative positions, identifying kinds of these objects by analyzing brightness distribution of the image portions and eliminating those of relative position data of the objects other than relative position data of desired objects from the relative position data of objects obtained by the radar part, and a monitoring part for obtaining continuously in time sequence the relative position data after the step of eliminating and continuously monitoring the desired objects based on the obtained relative position data.

With the forward direction monitoring device thus structured, the radar part serves not only to detect objects in front of the own vehicle but also to calculate their relative positions with respect to the own vehicle and the image taking part takes an image of road condition in front of the vehicle. The mapping part maps detected measurement points on the image take based on the detected relative distances. Throughout herein, anything that reflects light waves inclusive of vehicles and road surface markings are broadly referred to as "objects".

The object identifying part specifies portions of the image with respect to the relative positions and analyzes brightness distribution of the image portions. In the above, brightness means the intensity of reflection from each object obtained by the image taking part such as a camera. If the kind of the object is different, the brightness distribution will be accordingly different. The object identifying part makes use of this property and identifies the kinds of the objects. For example, a front-going vehicle and a road surface marking are thereby distinguished. After the objects are identified, the object identifying part eliminates those of relative position data of the objects other than relative position data of desired objects. For example, relative position data of road surface markings are eliminated and only the relative position data of a front-going vehicle are outputted. The monitoring part monitors the desired object or road surface marking (by detecting and/or tracing) based on the relative position data obtained as described above.

The mapping part may further be characterized as converting the image taken by the image taking part into a back-projection image and mapping the relative positions of the objects onto this back-projection image. On this back-projection image of a plan view of the road in front, the road length on the image and the relative distance obtained by the radar part become nearly equal. Thus, the mapping of relative positions by the radar with respect to objects on the image become more reliable.

The object identifying part may further be characterized as setting each of the image portions as a rectangular area defining vertical direction as the direction of motion of the own vehicle and horizontal direction as the direction of the width of the road, generating a histogram by cumulatively adding brightness of each point in the vertical direction corresponding to each point in the horizontal direction, detecting a width in the horizontal direction on the histogram where the cumulatively added brightness is in excess of a preliminarily determined reference value, and eliminating from consideration, if the detected width is greater than a preliminary defined first threshold value and the average of cumulatively added brightness corresponding to the detected width is greater than a preliminarily defined second threshold value, the object corresponding to the corresponding image portion. In summary, the object identifying part thus characterized creates a histogram by setting a rectangular area for each image portion as a method for identifying an object based on brightness distribution.

The forward direction monitoring device of this invention may further comprise a white line detector for detecting white lines extending parallel to the direction of the road and the said object identifying part may further have the functions of setting the width of the image portions in the horizontal direction and the first threshold value according to a change in the distance between the white lines detected by the white line detector. With such a structure, the brightness distribution inside image portions can be maintained within a certain range of condition even if the road width appearing on the image changes suddenly due to a change in the slope condition of the road.

With such white line detector provided, the mapping part may be further provided with the function of detecting a change in the slope condition of the road in front according to a change in the distance between the white lines detected by the white line detector and to correcting and mapping to the back-projection image the relative positions of the objects along the direction of the road according to the change in the slope condition. This means that the mapping of the relative positions by the radar device can be effected more reliably.

According to this invention, relative position data obtained by the radar can be distinguished by image processing based on a brightness distribution. In particular, a front-going vehicle which is moving approximately at the speed in front of the own vehicle can be distinguished from a road surface marking, say, in the shape of an arrow and only the relative position data of only road surface markings can be selectively eliminated. This was what prior art technologies could not accomplish. As a result, it is now possible to output the relative position data of only a desired object and to monitor only the desired object. In other words, the monitoring process becomes simplified and the process can be carried out at a higher speed and more reliably.

Brief Description of the Drawings

Fig. 1 is a block diagram of a principal portion of a forward direction monitoring device according to a first embodiment of this invention.
Fig. 2A is a drawing for showing the concept of forward direction monitoring by the device of Fig. 1, and Fig. 2B is an example of image taken by the camera.
Fig. 3 is a flowchart of a monitoring process according to the first embodiment of the invention.
Fig. 4A is a back-projection image obtained from the image of Fig. 2B, Fig. 4B is an example of distribution of measurement points detected by the radar, and Fig. 4C is a mapping image obtained by mapping the measurement points on the back-projection image.
Fig. 5 shows how rectangular shapes are set on a mapping image as shown in Fig. 4C.
Figs. 6 and 7 are examples of histograms.
Fig. 8 is a block diagram of a principal portion of a forward direction monitoring device according to a second embodiment of this invention.
Fig. 9 is a flowchart of a monitoring process according to the second embodiment of the invention.
Fig. 10A is an image of the front of the vehicle taken by the camera, Fig. 10B is a drawing of a distribution of measurement points detected by the radar, and Fig. 10C is a mapping image obtained by mapping the measurement points on the back-projection image of Fig. 10A without correction regarding sloped road condition.
Fig. 11 is a drawing for explaining the correction method regarding the sloped road condition.
Fig. 12 is a mapping image having corrected measurement points mapped onto the back-projection image.

Fig. 13 is a drawing for explaining a method for setting rectangular areas.

Detailed Description of the Invention

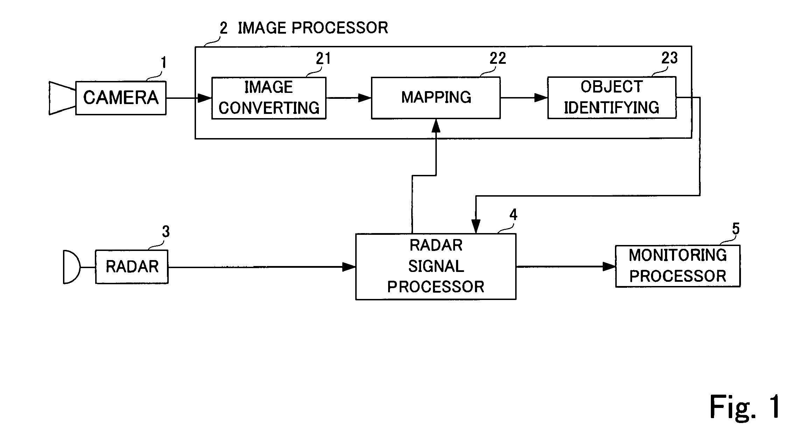

A forward direction monitoring device according to a first embodiment of this invention will be described first with reference to Figs. 1-7. Fig. 1 is a block diagram showing its principal portions. As shown, this forward direction monitoring device is provided with a camera 1, an image processor 2, a radar 3, a radar signal processor 4 and a monitoring processor 5. The image processor 2 includes an image converting part 21, a mapping part 22 and an object identifying part 23.

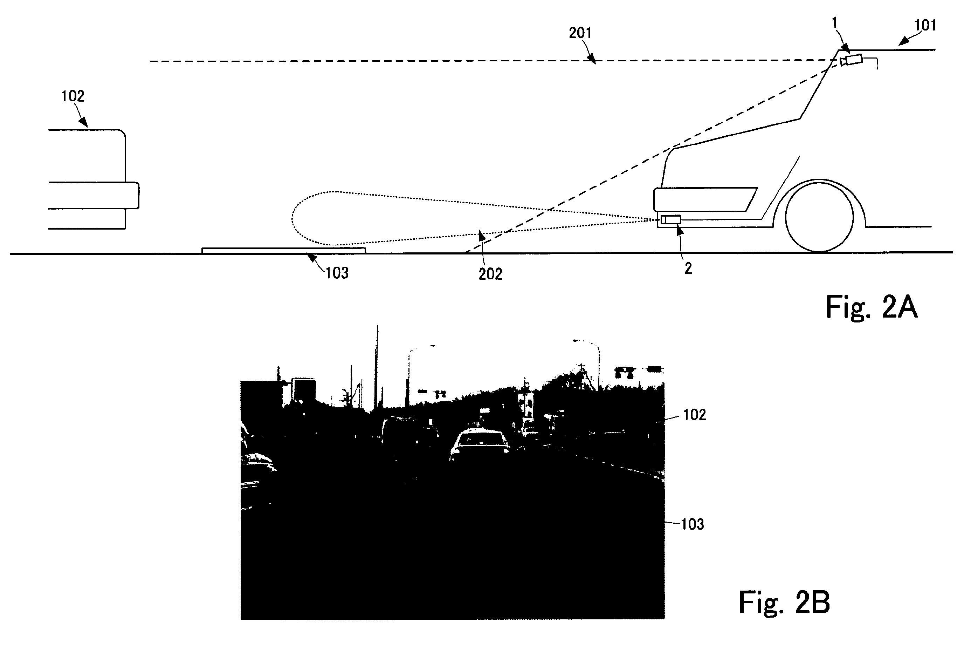

Fig. 2A is a drawing for showing the concept of forward direction monitoring by the device of Fig. 1, and Fig. 2B is an example of image taken by the camera 1. As shown, the camera 1 is set at an elevated position in front of the own vehicle 101 such that the front of the own vehicle comes to be its field of vision 201 and the camera 1 can take an image of the road condition in front at any time. The radar 3 is set at a lower portion in front of the own vehicle 101 such as directly below the front bumper and is adapted to detect the front of the own vehicle 101 by transmitting search detection waves 202 such that a specified forward direction will coincide with the center of its directionality and to receive reflected waves from an object such as a front-going vehicle 102. For such a purpose, a laser radar with a strong directionality and a forwardly advancing characteristic may be used. The radar 3 moves the detection waves in the direction of directional angles (or in the horizontal direction) at a specified period such that objects within a certain angular range in the horizontal direction can be detected. Since the beam from even a laser radar with a strong directionality has a certain spread, reflected waves not only from a target object such as a front-going vehicle 102 but also from a road surface marking 103 such as an arrow sign are received and such a road surface marking 103 is also detected.

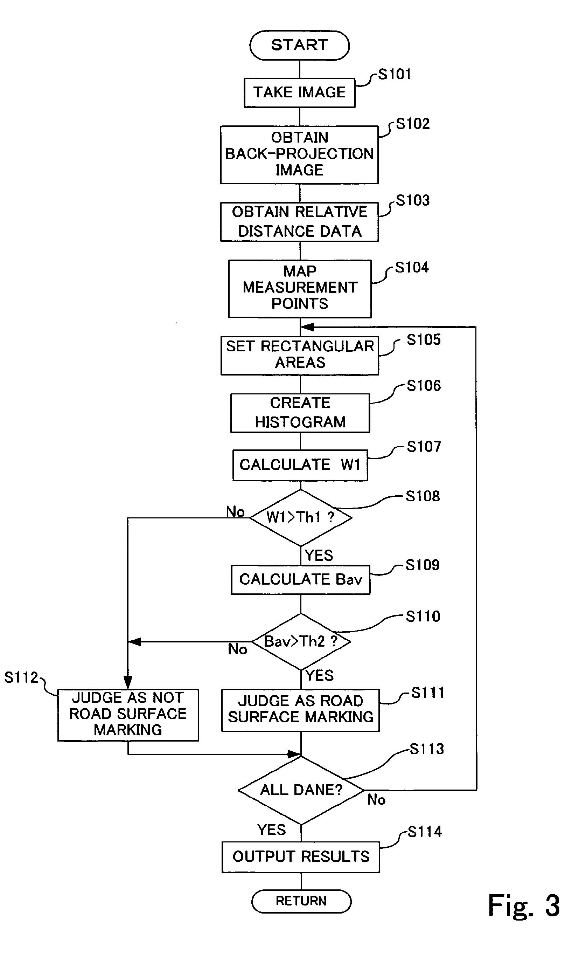

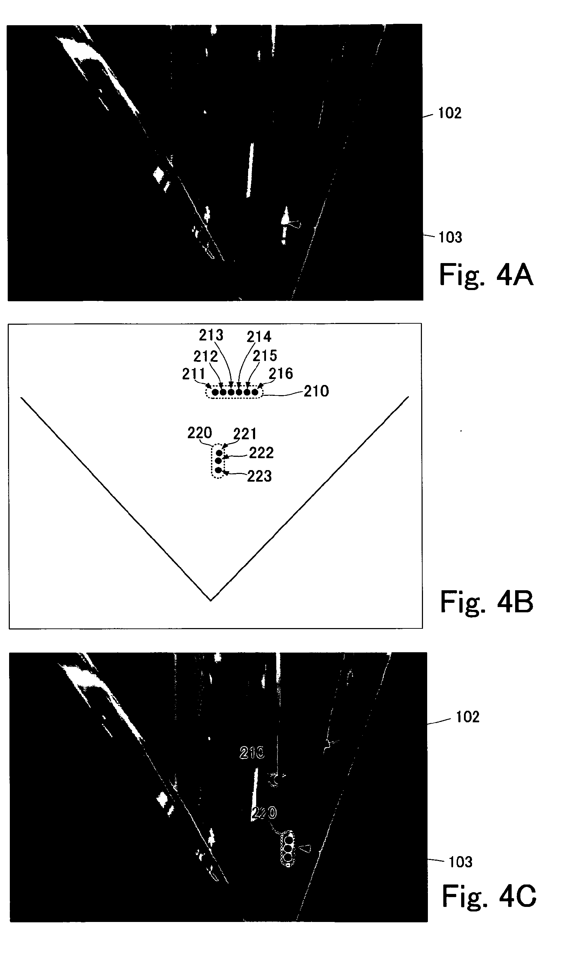

Fig. 3 is a flowchart of a monitoring process according to the first embodiment of the invention. The camera 1 is adapted to output images taken sequentially to the image converting part 21 of the image processor 2 (Step S101). The inputted image of the front of the own vehicle 101 is back-projected by the image converting part 21 and a back-projection image as shown in Fig. 4A is obtained (Step S102). The back-projection image displays each object at a length corresponding to its distance from the own vehicle 101. In other words, if the real distance to Object A from the own vehicle 101 is RA and the real distance to Object B from the own vehicle 101 is RB such that RA:RB = a:b, the ratio between the distance RA' to Object A from the own vehicle 101 as appearing on the back-projection image and the distance RB' to Object B from the own vehicle 101 as appearing on the back-projection image also becomes RA':RB' = a:b.

As explained above, the radar 3 serves to transmit detection waves and receive reflected waves to generate detection data and transmits the generated data to the radar signal processor 4. Such detection data include the difference between the time of transmitting the detection waves and the time of receiving the reflected waves, as well as the directional angle. The radar signal processor 4 calculates the relative distance to the detection point of the object, based on these detection data, and generates the measurement point data set by this relative distance and the direction angle, as shown in Fig. 4B. The generated measurement point data are transmitted to the mapping part 22 (Step S103).

Thus, the back-projection image based on the image taken by the camera 1 and the measurement point data based on the radar detection are inputted to the mapping part 22, and the mapping part 22 maps measurement points 211-216 and 221-223 onto the back-projection image as shown in Fig. 4C, based on the relative distances of the measurement data and the directions (Step S104). Since a back-projection image is used and the distances shown on the image match the relative distances of the measurement point data, the measurement points 211-216 and 221-223 agree with the positions of the front-going vehicle 102 and the road surface marking 103 displayed on the back-projection image. More specifically, measurement points 211-216 correspond to the shadow portion below the back of the front-going vehicle 102 and measurement points 221-223 correspond to the arrow sign painted in white on the road surface (or the road surface marking 103). It goes without saying, however, that it is actually not yet identified at this point in time that these measurement points correspond to the front-going vehicle 102 and the road surface marking 103.

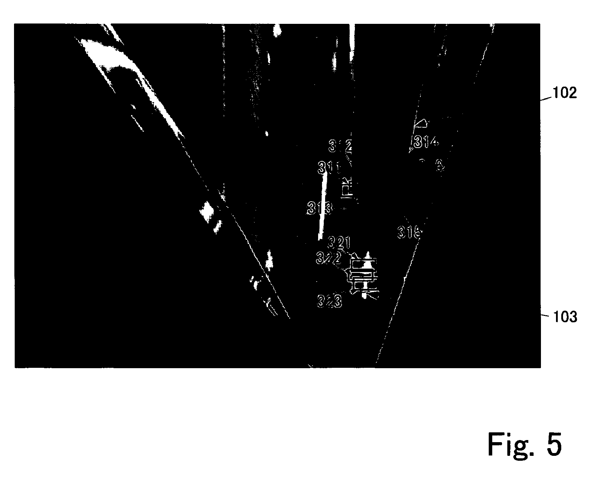

The object identifying part 23 sets rectangular areas 311-316 and 321-323 each having a specified area and with centers respectively at the measurement points 211-216 and 221-223 mapped on the back-projection image (Step S105), as shown in Fig. 5, each rectangular area having longer sides in the direction of the width of the road and shorter sides in the direction of the road. The lengths of the longer and shorter sides of these rectangles are preliminarily determined according to the shape of the object to be eliminated (to be explained below), or specifically according to the shape of the road surface markings 103. In the case of the example of Fig. 5, the length of the longer side of the rectangles may be set equal to about two-three times the width of the road surface marking 103 and the length of their shorter side (the width) of the rectangles may be set equal to about 1/3 - 1/4 of the length of the road surface marking 103.

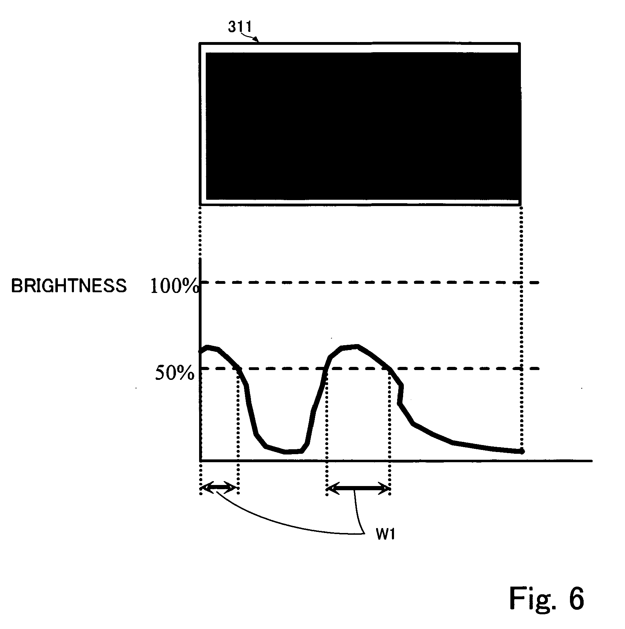

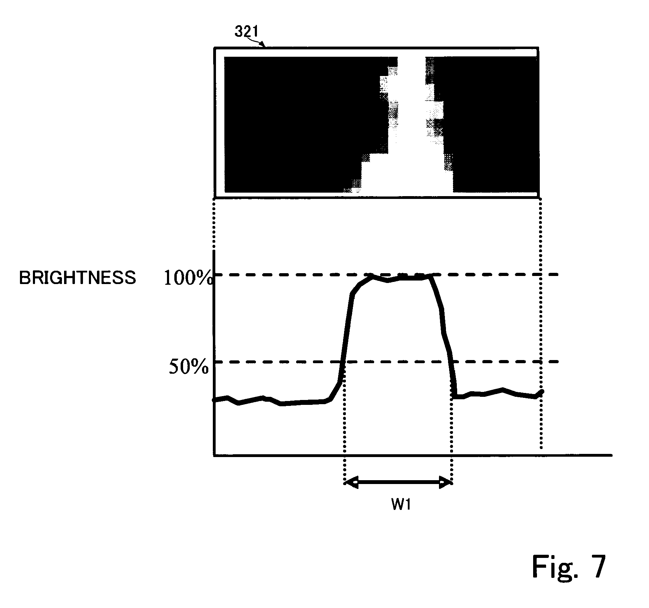

The object identifying part 23 creates a brightness histogram for each of the rectangular areas 311-316 and 321-323 (Step S106). This may be done firstly by dividing each area into n columns and m rows respectively along the longer and shorter sides to set a two-dimensionally arranged dot pattern. Next, the brightness of each of the m dots is calculated and cumulatively added along each column. A brightness histogram is obtained by corresponding the cumulatively added value to each of the columnar positions. The brightness values are then normalized by setting the highest of the brightness values in all of the columns of all of the rectangular areas 311-316 and 321-323 as 100% and the lowest brightness value as 0%. Histograms such as shown in Figs. 6 and 7 are thus obtained.

By using all these histograms thus created, the object identifying part 23 calculates for each of the rectangular areas 311-316 and 321-323 the width W1 (referred to as the half-value width) in the row-direction of each portion where the cumulatively added brightness value is 50% or higher (Step S107). Each half-value width W1 thus calculated is compared with a (first) threshold value TH1 which is preliminarily defined (Step S108). The cumulatively added brightness values of the portions for which W1 is found to be greater than TH1 are added and the sum is divided by the number of corresponding rows for each corresponding rectangular area to obtain an average brightness Bav (Step S109). If W1 is less than TH1 (NO in Step S108), it is judged that the object corresponding to that rectangular area is something other than a road surface marking 103 (Step S112).

After the average brightness Bav is calculated for each rectangular area, the object identifying part 23 compares it with another (second) preliminarily defined threshold value TH2 (Step S110). If Bav is larger than TH2 (YES in Step S110), it is judged that the object corresponding to this rectangular area is a road surface marking 103 (Step S111). If Bav is less than TH2 (NO in Step S110), it is judged that this object is other than a road surface marking (Step S112).

The first threshold value TH1 is based on the observation that the reflector at the back of the front-going vehicle 102 and road surface markings 103 have a high light reflectivity and produce an image with high brightness. The second threshold value TH2 is based on the observation that the reflection from a front-going vehicle is uniform and has fluctuations in brightness, while the reflection from a road surface marking 103 has hardly any fluctuations in brightness.

The object identifying part 23 carries out this kind of identification process sequentially for all of the rectangular areas 311-316 and 321-323 and determines whether the object corresponding to each rectangular area is a road surface marking or other than a road surface marking. Figs. 4-7 show an example wherein objects corresponding to rectangular areas 311-316 are each other than a road surface marking and objects corresponding to rectangular areas 321-323 are each a road surface marking. After this identification process is completed for all of the rectangular areas 311-316 and 321-323 (YES in Step S113), the results of these identifications are outputted to the radar signal processor 4 (Step S114).

Based on the inputted results of these identifications, the radar signal processor 4 arranges the measurement points 211-216 and 221-223 into groups 210 and 220 as shown in Fig. 4B, eliminates the data of the measurement points corresponding to the road surface marking 103 and outputs the rest. In the example of Figs. 4-7, measurement points 211-216 are gathered together as one group 210 and their results of radar detection (such as relative position data) are outputted because they do not correspond to a road surface marking 103. On the other hand, measurement points 212-213 are gathered together as another group 220 but are deleted because they correspond to a road surface marking 103.

The outputted radar detection results are inputted to the monitoring processor 5 which serves to sequentially process the received radar detection results (from which data corresponding to road surface markings have been deleted) by a known method and to carry out monitoring processes such as the tracing of a front-going vehicle and the detection of relative speed.

Thus, since data on unwanted objects such as road surface markings that are different from a front-going vehicle are prevented from being inputted to the monitoring processor 5, the forward direction monitoring process such as the tracing of the front-going vehicle can be effected more quickly.

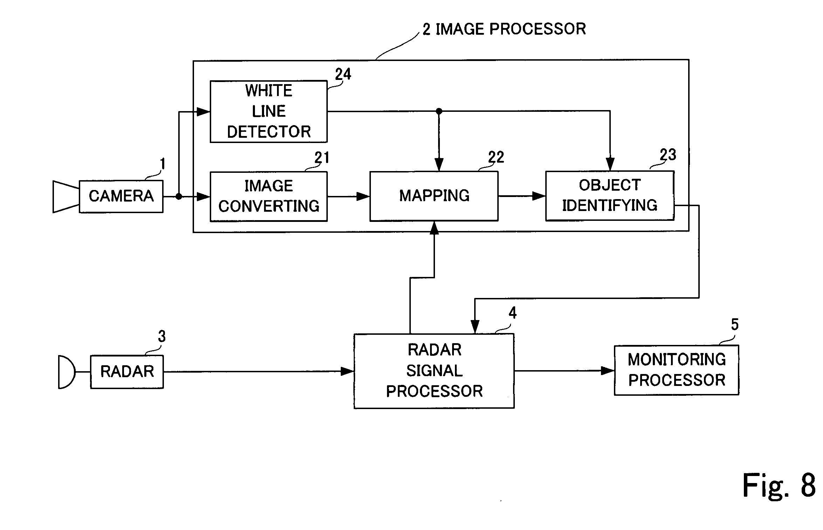

Next, another forward direction monitoring device according to a second embodiment of this invention is described with reference to Figs. 8-13. Fig. 8 is a block diagram of a principal portion of a forward direction monitoring device according to the second embodiment of this invention. Components that are substantially the same as or at least equivalent to those already described with reference to the first embodiment of the invention are indicated by the same numerals and are not explained repetitiously.

As shown in Fig. 8, the forward direction monitoring device of the second embodiment is similar to the one according to the first embodiment except that its image processor 2 is provided with a white line detector 24 and its mapping part 22 and object identifying part 23 process differently.

The white line detector 24 is for detecting a white line from an image taken by the camera 1. Examples of the method for detecting a white line by this white line detector 24 include one described by Mineta, et al. in "Development of White Line Detecting Systems in Lane Keep Assist System" (Honda R&D Technical Review (2000), Vol. 12, No. 1, pages 101-108). The data on the position of a detected white line on the image is converted into back-projection position data and transmitted to the mapping part 22.

The mapping part 22 corrects the relative distances of measurement points obtained from the radar signal processor 4 based on this result of white line detection with respect to the sloped road condition and maps them onto the back-projection image obtained from the image converting part 21. The object identifying part 23 calculates the road width L based on the result of white line detection and sets the width S in the longitudinal direction of rectangular areas based on this road width L. The object identifying part 23 also sets a first threshold value TH1 based on the width S as explained above regarding the first embodiment. A brightness histogram is similarly calculated for each rectangular area and the object is identified by using this threshold value TH1.

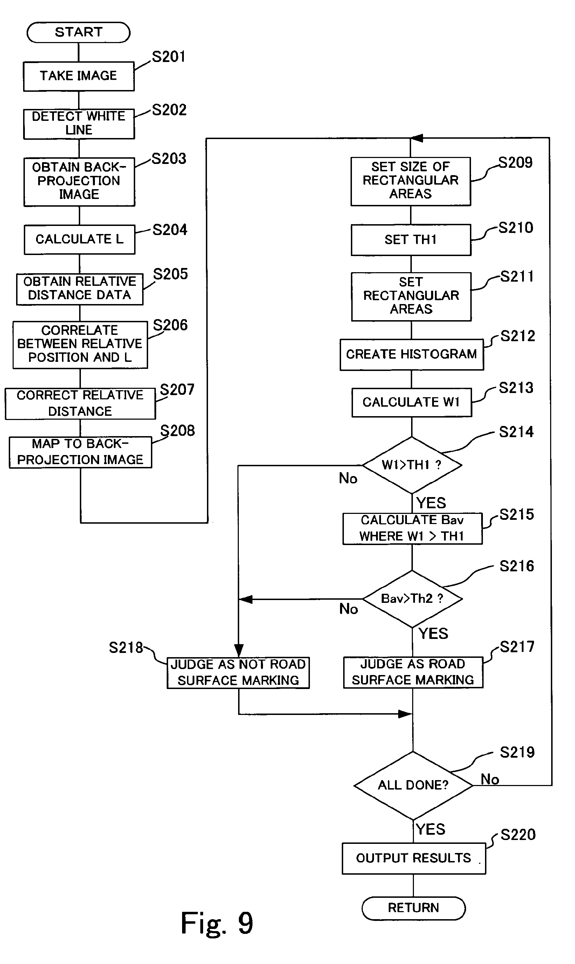

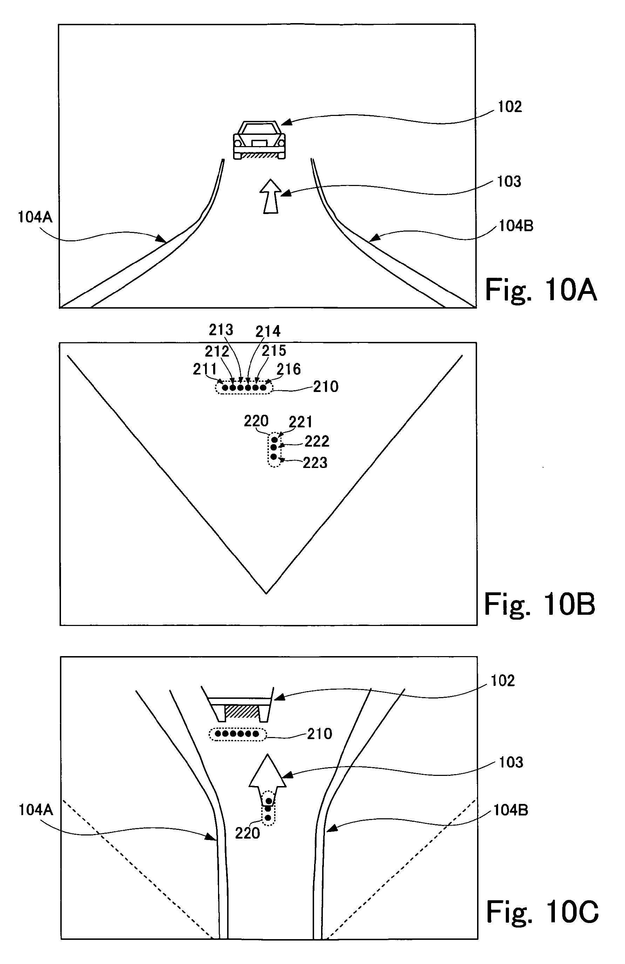

Fig. 9 is a flowchart of a monitoring process according to the second embodiment of the invention. The monitoring process according to the second embodiment of the invention is explained next with reference to this flowchart, as well as Figs. 10-13. Processes that are already described with respect to the first embodiment will not be repetitiously explained.

Images taken by the camera 1 as shown in Fig. 10A are sequentially transmitted to the image converting part and the white line detector 24 of the image processor 2 (Step S201). The white line detector 24 detects a white line by a method as described above (Step S202) and outputs white line position data to the mapping part 22 and the object identifying part 23. The image converting part 21 generates a back-projection image of the front of the vehicle as shown in Fig. 10C (Step S203). The white line position data are outputted in the form of coordinates given by back-projection carried out by the image converting part 21. The mapping part 22 calculates road width at each of points along the direction of the road based on the white line position data obtained by the white line detector 24 (Step S204).

The radar 3 transmits detection waves as explained above and generates detection data by receiving reflected waves. The generated detection data are provided to the radar signal processor 4. Such detection data include the difference between the time of transmitting the detection waves and the time of receiving the reflected waves, as well as the directional angle. The radar signal processor 4 calculates the relative distance to the detection point of the object, based on these detection data, and generates the measurement point data set by this relative distance and the direction angle, as shown in Fig. 10B. The generated measurement point data are transmitted to the mapping part 22 (Step S205).

The mapping part 22 maps measurement points 211-216 and 221-223 onto the back-projection image based on the relative distances of the measurement data and the directions (Step S208). If no correction were made regarding the sloped road condition on the relative distances, displacements would result as shown in Fig. 10C between the object positions on the back-projection image and the measurement points by the radar 3. According to this embodiment of the invention, therefore, the mapping part 22 serves to correlate between the relative positions of the measurement points 211-216 and 221-223 and the road width L (Step S206) and the relative distances D are corrected (to corrected relative distances D') according to the sloped condition of the road (Step S207) to be mapped onto the back-projection image.

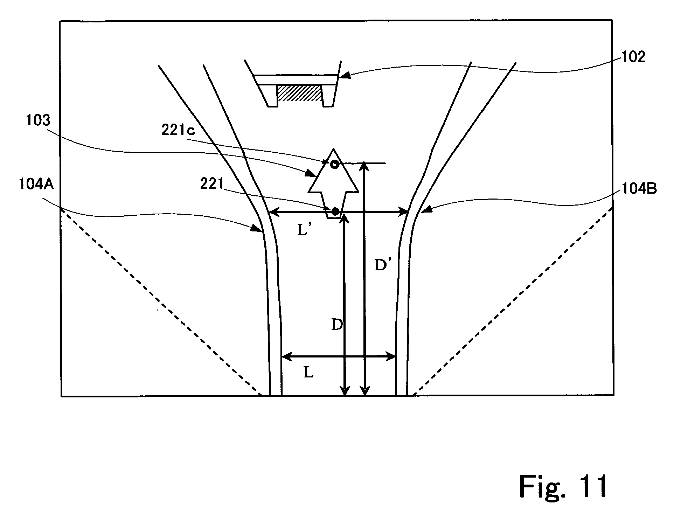

This is explained more in detail with reference to Fig. 11. Let D be the uncorrected relative distance of measurement point 211, D' be the corrected relative distance on the back-projection image, L be the road width at the position of the own vehicle 101 and L' be the uncorrected road width at the position of measurement point 211. Then, the corrected relative distance D' on the back-projection image can be calculated as:

$$D' = D(L'/L).$$

The road width L at the position of the own vehicle 101 may be taken as the road width at the closest measurable position or extracted from a navigation system (not sown).

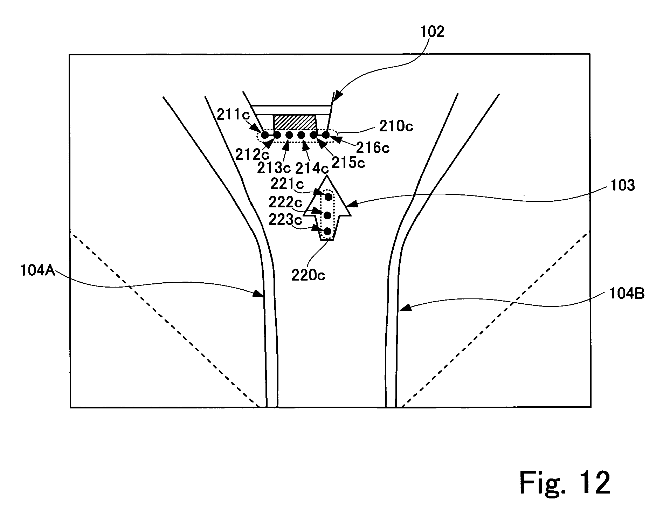

If such a correction process is carried out, measurement points 211c-216c and 221c-223c obtained by using corrected relative distances match the positions of the front-going vehicle 102 or the road surface marking 103 displayed on the back-projection image, as shown in Fig. 12. Specifically, measurement points 211 c-216c correspond to the shadow portion below the back of the front-going vehicle 102 and measurement points 221c-223c correspond to the arrow sign painted in white on the road surface (or the road surface marking 103).

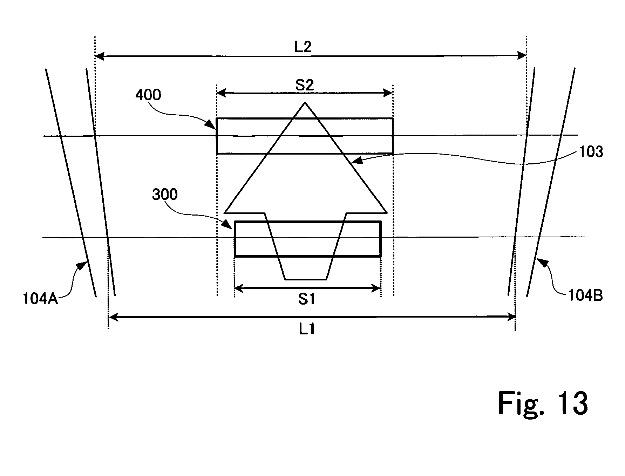

The object identifying part 23 sets rectangular areas 311-316 and 321-323 each having a specified area and with centers respectively at the measurement points 211 c-216c and 221c-223c mapped on the back-projection image (Step S211), each rectangular area having longer sides in the direction of the width of the road and shorter sides in the direction of the road. The lengths of the longer and shorter sides of these rectangles are preliminarily determined according to the shape of the object to be eliminated (to be explained below), or specifically according to the shape of the road surface markings 103. The length of the longer side of the rectangular area (width S) may be set according to the road width L at the corrected positions of measurement points 211 c-216c and 221c-223c (Step S209). In the case of the example of Fig.13, it may be set about equal to 1/3 - 1/4 of the length of the road surface marking 103 and the width S of the longer side about equal to 1/3 of the road width L. Since the width S of the longer side depends on the position of the corresponding rectangular area (measurement point) and the road width L, if rectangular areas 300 and 400 are set as shown in Fig. 13, S1 is the length of the longer side of area 300, L1 is the road width at this position, S2 is the length of the longer side of area 400 and L2 is the road width at this position, (S1/L1) = (S2/L2).

The object identifying part 23 sets the first threshold value TH1 based on the road width L at the corrected positions of the measurement points 211c-216c and 221c-223c (Step S210), say, about equal to 1/2 of the width S of the rectangular areas.

The object identifying part 23 creates a brightness histogram for each of the rectangular areas 311-316 and 321-323 (Step S212) as explained above regarding the first embodiment. The brightness values are then normalized by setting the highest of the brightness values in all of the columns of all of the rectangular areas 311-316 and 321-323 as 100% and the lowest brightness value as 0%.

By using all these histograms thus created, the object identifying part 23 calculates for each of the rectangular areas 311-316 and 321-323 the width W1 (referred to as the half-value width) in the row-direction of each portion where the cumulatively added brightness value is 50% or higher (Step S213). Each half-value width W1 thus calculated is compared with a (first) threshold value TH1 which is preliminarily defined (Step S108). The cumulatively added brightness values of the portions for which W 1 is found to be greater than TH1 are added and the sum is divided by the number of corresponding rows for each corresponding rectangular area to obtain an average brightness Bav. If W1 is less than TH1, it is judged that the object corresponding to that rectangular area is something other than a road surface marking 103 (Step S214 to Step S218).

After the average brightness Bav is calculated for each rectangular area, the object identifying part 23 compares it with another (second) preliminarily defined threshold value TH2 (Step S216). If Bav is larger than TH2 (YES in Step S216), it is judged that the object corresponding to this rectangular area is a road surface marking 103 (Step S217). If Bav is less than TH2 (NO in Step S216), it is judged that this object is other than a road surface marking (Step S218).

The object identifying part 23 carries out this kind of identification process sequentially for all of the rectangular areas 311-316 and 321-323 and determines whether the object corresponding to each rectangular area is a road surface marking or other than a road surface marking. After this identification process is completed for all of the rectangular areas 311-316 and 321-323 (YES in Step S219), the results of these identifications are outputted to the radar signal processor 4 (Step S220).

Based on the inputted results of these identifications, the radar signal processor 4 arranges the measurement points 211-216 and 221-223 into groups 210 and 220 as shown in Fig. 4B, eliminates the data of the measurement points corresponding to the road surface marking 103 and outputs the rest. In the example of Figs. 10 and 12, measurement points 211-216 are gathered together as one group 210 and their results of radar detection (such as relative position data) are outputted because they do not correspond to a road surface marking 103. On the other hand, measurement points 212-213 are gathered together as another group 220 but are deleted because they correspond to a road surface marking 103.

The outputted radar detection results are inputted to the monitoring processor 5 which serves to sequentially process the received radar detection results (from which data corresponding to road surface markings have been deleted) by a known method and to carry out monitoring processes such as the tracing of a front-going vehicle and the detection of relative speed.

Thus, even if the slope of the road changes between the own vehicle and the vehicle in front, the relative distances are corrected such that the measurement points detected by the radar and the positions of objects on the image match and errors in detection can be prevented.

Moreover, since the rectangular areas and the threshold value are set according to the road width, road surface markings can be detected reliably without being affected by the changes in the widths of road surface markings caused by changes in the sloped condition of the road, and errors can be even more reliably avoided.

**Claims**

1. A forward direction monitoring device comprising:

    an image taking part for taking an image of road condition in front of own vehicle;
    a radar part for projecting detecting waves into a detection area in front of said own vehicle and receiving reflected waves of said detecting waves from objects in front to thereby obtain relative position data on relative positions of said objects with respect to said own vehicle;
    a mapping part for mapping said relative positions of said objects on said image taken by said image taking part;
    an object identifying part for specifying image portions of said image with respect to said relative positions, identifying kinds of said objects by analyzing brightness distribution of said image portions and eliminating those of relative position data of said objects other than relative position data of desired objects from the relative position data of said objects obtained by said radar part; and
    a monitoring part for obtaining continuously in time sequence the relative position data after the step of eliminating and continuously monitoring said desired objects based on said obtained relative position data.

2. The forward direction monitoring device of claim 1 wherein said mapping part converts said image taken by said image taking part into a back-projection image and maps said relative positions of said objects onto said back-projection image.

3. The forward direction monitoring device of claim 1 wherein said object identifying part has the functions of:

setting each of said image portions as a rectangular area defining vertical direction as the direction of motion of said own vehicle and horizontal direction as the direction of the width of the road;

generating a histogram by cumulatively adding brightness of each point in said vertical direction corresponding to each point in said horizontal direction;

detecting a width in said horizontal direction on said histogram where the cumulatively added brightness is in excess of a preliminarily determined reference value; and

eliminating from consideration, if said detected width is greater than a preliminary defined first threshold value and the average of cumulatively added brightness corresponding to said detected width is greater than a preliminarily defined second threshold value, the object corresponding to the corresponding image portion.

4. The forward direction monitoring device of claim 2 wherein said object identifying part has the functions of:

setting each of said image portions as a rectangular area defining vertical direction as the direction of motion of said own vehicle and horizontal direction as the direction of the width of the road;

generating a histogram by cumulatively adding brightness of each point in said vertical direction corresponding to each point in said horizontal direction;

detecting a width in said horizontal direction on said histogram where the cumulatively added brightness is in excess of a preliminarily determined reference value; and

eliminating from consideration, if said detected width is greater than a preliminary defined first threshold value and the average of cumulatively added brightness corresponding to said detected width is greater than a preliminarily defined second threshold value, the object corresponding to the corresponding image portion.

5. The forward direction monitoring device of claim 3 further comprising a white line detector for detecting white lines extending parallel to the direction of the road;

wherein said object identifying part further has the functions of setting the width of the image portions in said horizontal direction and said first threshold value according to a change in the distance between said white lines detected by said white line detector.

6. The forward direction monitoring device of claim 4 further comprising a white line detector for detecting white lines extending parallel to the direction of the road;

wherein said object identifying part further has the functions of setting the width of the image portions in said horizontal direction and said first threshold value according to a change in the distance between said white lines detected by said white line detector.

7. The forward direction monitoring device of claim 2 further comprising a white line detector for detecting white lines extending parallel to the direction of the road;

wherein said mapping part serves to detect a change in the slope condition of the road in front according to a change in the distance between said white lines detected by said white line detector and to correct and map to said back-projection image the relative positions of said objects along the direction of the road according to said change in the slope condition.

8. The forward direction monitoring device of claim 3 further comprising a white line detector for detecting white lines extending parallel to the direction of the road;

wherein said mapping part serves to detect a change in the slope condition of the road in front according to a change in the distance between said white lines detected by said white line detector and to correct and map to said back-projection image the relative positions of said objects along the direction of the road according to said change in the slope condition.

9. The forward direction monitoring device of claim 4 further comprising a white line detector for detecting white lines extending parallel to the direction of the road;

wherein said mapping part serves to detect a change in the slope condition of the road in front according to a change in the distance between said white lines detected by said white line detector and to correct and map to said back-projection image the relative positions of said objects along the direction of the road according to said change in the slope condition.

10. The forward direction monitoring device of claim 5 wherein said mapping part serves to detect a change in the slope condition of the road in front according to a change in the distance between said white lines detected by said white line detector and to correct and map to said back-projection image the relative positions of said objects along the direction of the road according to said change in the slope condition.

11. The forward direction monitoring device of claim 6 wherein said mapping part serves to detect a change in the slope condition of the road in front according to a change in the distance between said white lines detected by said white line detector and to correct and map to said back-projection image the relative positions of said objects along the direction of the road according to said change in the slope condition.

Fig. 1

Fig. 2A

Fig. 2B

EP 1 770 411 A2

START

TAKE IMAGE — S101

OBTAIN BACK-PROJECTION IMAGE — S102

OBTAIN RELATIVE DISTANCE DATA — S103

MAP MEASUREMENT POINTS — S104

SET RECTANGULAR AREAS — S105

CREATE HISTOGRAM — S106

CALCULATE W1 — S107

S108 — W1>Th1 ? — No

YES

CALCULATE Bav — S109

S110 — Bav>Th2 ? — No

YES

S112 — JUDGE AS NOT ROAD SURFACE MARKING

JUDGE AS ROAD SURFACE MARKING — S111

ALL DANE? — S113 — No

YES

OUTPUT RESULTS — S114

RETURN

Fig. 3

— 102

— 103

Fig. 4A

213   214
212    215
211      216
                 210
220   221
          222
          223

Fig. 4B

— 102

210

220

— 103

Fig. 4C

Fig. 5

BRIGHTNESS

Fig. 6

321

BRIGHTNESS  100%

50%

W1

Fig. 7

EP 1 770 411 A2

**2 IMAGE PROCESSOR**

```
                    WHITE
                    LINE          24
                  DETECTOR

  CAMERA    1    IMAGE      21   MAPPING   22   OBJECT      23
                CONVERTING                    IDENTIFYING


  RADAR    3           RADAR              4   MONITORING    5
                       SIGNAL                 PROCESSOR
                     PROCESSOR
```

Fig. 8

START

TAKE IMAGE — S201

DETECT WHITE LINE — S202

OBTAIN BACK-PROJECTION IMAGE — S203

CALCULATE L — S204

OBTAIN RELATIVE DISTANCE DATA — S205

CORRELATE BETWEEN RELATIVE POSITION AND L — S206

CORRECT RELATIVE DISTANCE — S207

MAP TO BACK-PROJECTION IMAGE — S208

SET SIZE OF RECTANGULAR AREAS — S209

SET TH1 — S210

SET RECTANGULAR AREAS — S211

CREATE HISTOGRAM — S212

CALCULATE W1 — S213

W1>TH1 ? — S214

No

YES

CALCULATE Bav WHERE W1 > TH1 — S215

Bav>Th2 ? — S216

No

YES

S218 — JUDGE AS NOT ROAD SURFACE MARKING

JUDGE AS ROAD SURFACE MARKING — S217

ALL DONE? — S219

No

YES

OUTPUT RESULTS — S220

RETURN

Fig. 9

18

Fig. 10A

Fig. 10B

Fig. 10C

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3264060 B
- JP 2002303671 A
- JP 3619628 B
- JP 9264954 A

**Non-patent literature cited in the description**

- **MINETA et al.** Development of White Line Detecting Systems in Lane Keep Assist System. *Honda R&D Technical Review,* 2000, vol. 12 (1), 101-108